# EUROPEAN PATENT APPLICATION

(11) **EP 1 783 519 A1**
(43) Date of publication of application: **09.05.2007**
(21) Application number: 05709962.4
(22) Date of filing: 09.02.2005
(51) Int. Cl.: G02B 5/18, G02B 27/00

(54) **REFRACTIVE INDEX MODULATION DIFFRACTION OPTICAL ELEMENT AND PROJECTOR COMPRISING IT**

(30) Priority: 14.05.2004 JP 2004145254
(71) Applicant: Sumitomo Electric Industries, Ltd., Osaka-shi, Osaka 541-0041 (JP)
(72) Inventor: USHIRO, Toshihiko; c/o Itami Works of SUMITOMO, 1-chome, Itami-shi, Hyogo; 6648611 (JP); MATSUURA, Takashi; c/o Itami Works of SUMITOMO, 1-chome, Itami-shi, Hyogo; 6648611 (JP)
(74) Representative: HOFFMANN EITLE
(86) International application number: PCT/JP2005/001910
(87) International publication number: WO 2005/111673

(57) **Abstract**

A optical diffraction element of a refractive-index-modulated type includes a transparent DLC film formed on a transparent substrate, wherein the DLC film is subjected to refractive-index modulation so as to include a plurality of relatively-high-refractive-index regions and a plurality of relatively-low-refractive-index regions for causing diffraction of light, and the refractive-index modulation causes diffraction effect so as to convert an intensity distribution in a cross section of a light beam applied to the DLC film into a uniform intensity distribution on a prescribed illumination surface.

## Description

### Technical Field

The present invention relates to improvements of an optical diffraction element that can make a uniform light intensity distribution in a cross section of a light beam and can also shape a cross-sectional form of the beam. Such an optical diffraction element may preferably be used in a projector, for example.

### Background Art

In recent years, LCD (Liquid Crystal Display), PDP (Plasma Display Panel), and the like have been developed for a large-sized image display apparatus. In view of a demand for further increase in size of the display apparatus, however, a projector (projection-type display apparatus) is now of interest. As kinds of projectors, there are a projector for projecting an image onto the front side of a screen, a rear-projection TV for projecting an image from behind a screen onto the same screen, and the like.

As a kind of projector, a projection-type CRT (cathode-ray tube) display apparatus has conventionally been used, which projects an image created on a high-definition and high-brightness CRT onto a screen. In recent years, a projection-type liquid crystal display apparatus has also been developed, in which a light beam is directed from a light source to a liquid crystal panel so as to project an image created on the liquid crystal panel onto a screen. Further, a DLP (Digital Light Processing) projector has also been developed, which operates microscopically small mirrors a few thousand times per second so as to depict an image. Such projection-type liquid crystal display apparatus and DLP projector are advantageous in that they are suitable for reduction in size and weight and thus they may readily be introduced in ordinary households.

A light beam from a light source that is generally used in the projector, however, has a nonuniform light intensity distribution in a cross section of the beam. For example, the light intensity tends to be higher in the central part of the beam section and lower in the peripheral part as in a Gaussian distribution. In the case that such a light beam is used to project an image created on a liquid crystal panel onto a screen, it is not possible to realize a uniform brightness over the whole area of the screen and then the projected image is darker in the peripheral part of the screen than in the central part.

Further, a light beam from a light source is usually circular in cross section. A screen onto which an image is to be projected from a projector, however, usually has a rectangular shape (square or rectangle). For efficient use of light energy, therefore, it is desired to use an optical diffraction element having a function in which a circular cross section of a beam is converted by diffraction into a rectangular cross section for example, rather than to use an aperture for partially blocking the peripheral part of the cross section of the beam so as to shape the cross-sectional form.

Accordingly, Patent Document 1 of Japanese Patent Laying-Open No. 8-313845, for example, discloses an optical diffraction element that can make a uniform intensity distribution in a cross section of a light beam and can shape the cross-sectional form of the beam. Such an optical diffraction element is sometimes called a diffraction-type beam-shaping element.

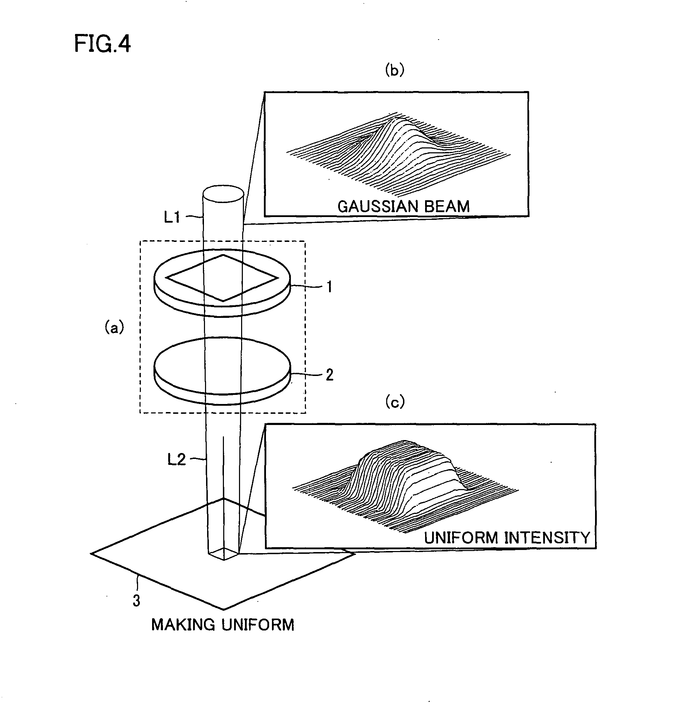

In Fig. 4, effect of a diffraction-type beam-shaping element is diagrammatically shown in a schematic perspective view, for example. A light beam L1 directed to a beam-shaping element 1 shown in Fig. 4 (a) has a circular cross section and has a Gaussian intensity distribution in the cross section as shown in Fig. 4 (b) (in Fig. 4 (b), the height of scan lines is shown in proportion to the light intensity). In other words, beam L1 has the highest intensity at the central part of its cross section, while the intensity gradually decreases with decrease in distance to the periphery of the cross section. A light beam L2 having passed through beam-shaping element 1 is directed to a prescribed illumination surface 3 through a lens 2. At this time, beam L2 applied onto illumination surface 3 is changed by diffraction effect of beam-shaping element 1 to have a cross-sectional shape of a square and to have a uniform intensity distribution in the cross section (in Fig. 4 (c) as well, the height of scan lines is shown in proportion to the light intensity).

It is well known that there are optical diffraction elements of a relief type and a refractive-index-modulated type. An optical diffraction element of the relief type can be fabricated by processing a quartz-based glass layer with photolithography and etching, for example. Specifically, the quartz-based glass layer thus processed for the optical diffraction element of the relief type includes a plurality of regions that are relatively thick and a plurality of regions that are relatively thin. Light having passed through the thick regions and light having passed through the thin regions have respective phases different from each other, whereby causing diffraction effect.

In contrast, an optical diffraction element of the refractive-index-modulated type can be fabricated by increasing the refractive index in local regions of a Ge-doped quartz-based glass layer by means of ultraviolet radiation, for example. Specifically, the Ge-doped quartz-based glass layer in the optical diffraction element of the refractive-index-modulated type includes a plurality of regions having a relatively high refractive index and a plurality of regions having a relatively low refractive index. Light having passed through the high-refractive-index regions and light having passed through the low-refractive-index regions have respective phases different from each other, whereby causing diffraction effect.

Patent Document 1: Japanese Patent Laying-Open No. 8-313845

### Disclosure of the Invention

### Problems to be Solved by the Invention

It is theoretically possible to fabricate an optical diffraction element of the refractive-index-modulated type as described above. However, it is difficult to obtain a practical optical diffraction element of the refractive-index-modulated type, since the refractive index change obtainable in a quartz-based glass by irradiation with an energy beam is at most about 0.01 for example and thus it is difficult to form an effective diffraction grating layer.

Currently, therefore, the relief type is generally used for the optical diffraction element as described in Patent Document 1. However, the photolithography and the etching necessary for fabricating the relief-type optical diffraction element are fairly complicated processing steps that need considerable time and work. Further, it is not easy to precisely control the depth of etching. Furthermore, since the relief-type optical diffraction element has a fine unevenness on its surface, there is a problem that dust, dirt and the like are liable to adhere thereto.

In view of the circumstances of the prior art as described above, an object of the present invention is to provide, efficiently and at low cost, a practical optical diffraction element that can make a uniform light intensity distribution in a cross section of a light beam and can also shape the cross-sectional form of the beam.

### Means for Solving the Problems

According to the present invention, an optical diffraction element of a refractive-index-modulated type includes a transparent DLC (diamond-like carbon) film formed on a transparent substrate. The DLC film is subjected to refractive-index modulation so as to include a plurality of relatively-high-refractive-index regions and a plurality of relatively-low-refractive-index regions for causing diffraction of light. The refractive-index modulation causes diffraction effect so as to convert an intensity distribution in a cross section of a light beam applied to the DLC film into a uniform intensity distribution on a prescribed illumination surface.

The refractive-index modulation can also cause diffraction effect so as to convert a cross-sectional shape of the light beam applied to the DLC film into a prescribed cross-sectional shape on a prescribed illumination surface. Further, the refractive-index modulation can cause the diffraction effect on light including a wavelength in a visible range of 0.4 to 0.7 µm.

A projector may preferably include a light source and the optical diffraction element of the refractive-index-modulated type as described above, and then a uniform brightness can be provided on a screen, namely, a high-quality image can be projected on the screen. The light source can be one selected from a laser device, a light-emitting diode and a lamp. Further, the lamp can be one selected from an extra-high-pressure mercury lamp, a xenon lamp, and a halide lamp.

According to a method of fabricating the optical diffraction element of the refractive-index-modulated type as described above, the DLC film can preferably be formed by means of plasma CVD (Chemical Vapor Deposition). Further, the relatively-high-refractive-index regions in the DLC film can be realized by irradiating the DLC film with an energy beam to increase the refractive index thereof. Furthermore, for the energy beam irradiation, it is possible to select at least one from ion irradiation, electron beam irradiation, SR irradiation and UV irradiation.

### Effects of the Invention

According to the present invention, an optical diffraction element that is mechanically and thermally stable can be readily provided at low costs, which can make a uniform light intensity distribution in a cross section of a light beam and can also shape the cross sectional form of the beam. Further, the optical diffraction element of the present invention is of refractive-index-modulated type and has a flat surface differently from the conventional optical diffraction element of the relief-type. Therefore, an antireflection coating can easily be formed on the flat surface. Further, dust and the like are unlikely to adhere to the flat surface and thus it is possible to prevent deterioration in utilization efficiency of the light. Furthermore, since the DLC film can be formed on a surface of any of various bases, the optical diffraction element of the present invention can be integrated with other optical components.

### Brief Description of the Drawings

Fig. 1 is a plan view showing an example of a distribution state of high-refractive-index regions and low-refractive-index regions in an optical diffraction element of a refractive-index-modulated type according to the present invention.
Fig. 2A is a schematic cross-sectional view illustrating an example of a method of fabricating the optical diffraction element of the refractive-index-modulated type shown in Fig. 1.
Fig. 2B is a schematic cross-sectional view illustrating the example of the method of fabricating the optical diffraction element of the refractive-index-modulated type shown in Fig. 1.
Fig. 3 is a schematic block diagram showing an example of a color projector including a diffraction-type beam-shaping element according to the present invention.
Fig. 4 is a schematic perspective view illustrating effect of a diffraction-type beam-shaping element.

### Description of the Reference Signs

1 beam-shaping element, 2 lens, 3 illumination surface, 11a red laser device, 11b green laser device, 11c blue laser device, 12a, 12b, 12c diffraction-type beam-shaping element, 13a, 13b, 13c polarization beam splitter, 14a, 14b, 14c liquid crystal panel, 15 color-combining prism, 16 projection lens, 41 DLC film, 42 Ni conductive layer, 43 resist pattern, 44 gold mask layer, 45 energy beam, 41 a high-refractive-index region, 41b low-refractive-index region

### Best Modes for Carrying Out the Invention

In making the present invention, the inventors have confirmed that it is possible to increase the refractive index of a transparent DLC (diamond-like carbon) film by irradiating the film with an energy beam. Such a DLC film can be formed by plasma CVD (Chemical Vapor Deposition) on any of a silicon substrate, a glass substrate and other various bases. The transparent DLC film thus obtained by plasma CVD usually has a refractive index of approximately 1.55.

For the energy beam for increasing the refractive index of the DLC film, it is possible to use any of an ion beam, an electron beam, synchrotron radiation (SR), and ultraviolet (UV) radiation, for example. In the present state, it has been confirmed that He ion irradiation among the above examples of energy beam irradiation can increase the change in refractive index of the DLC film up to approximately Δn = 0.65. Further, SR irradiation can also increase the change in refractive index of the DLC film up to approximately Δn = 0.50. Furthermore, with UV irradiation as well, the change in refractive index of the DLC film can be increased to approximately Δn = 0.20. Thus, it is seen that the refractive index change of the DLC film caused by the energy beam irradiation is remarkably large as compared with the refractive index change Δn of the conventional quartz-based glass caused by UV irradiation (Δn is approximately 0.01 or less).

The inventors further performed simulation of diffraction effect of a beam-shaping element fabricated by using the DLC film. For this simulation, "VirtualLab" was used, which is calculation software available from LightTrans GmbH in Germany. With this calculation software, it is possible to simulate a diffraction grating and diffraction effect thereof by repeating calculation using Fourier transform.

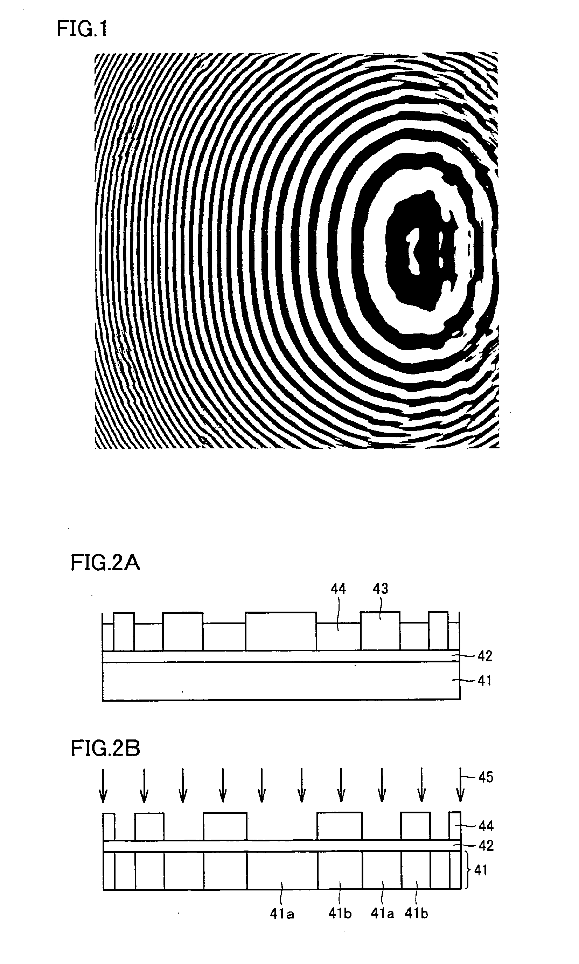

Fig. 1 is a plan view showing a refractive index distribution in an optical diffraction element of a refractive-index-modulated type, which has been obtained by using VirtualLab. It has been supposed that this optical diffraction element has been fabricated using a DLC film of 4.43 µm thickness, and the diffraction grating pattern of the element shows a square area of 4 mm × 4 mm. In the simulation, the calculation for the 4 mm × 4 mm square area was carried out after that area was divided into 800 × 800 fine square areas (hereinafter referred to as pixels). In other words, one pixel is set to be a square area of 5 µm × 5 µm.

In the diffraction grating pattern of Fig. 1, black stripe-shaped regions represent regions of high refractive index and white stripe-shaped regions represent regions of low refractive index. More specifically, the white strip-shaped regions have a low refractive index of 1.55 and the black strip-shaped regions have a high refractive index of 1.725. Namely, the difference in refractive index between these regions is Δn = 0.175. In the case that the refractive index is changed to have two levels as above, the optical diffraction element is called a two-level optical diffraction element. Similarly, in the case that the refractive index is changed to have four levels, the optical diffraction element is called a four-level optical diffraction element. In general, an optical diffraction element with a larger number of levels can more enhance the diffraction efficiency.

Simulation of beam-shaping was carried out by using the two-level optical diffraction element of Fig. 1 as set as described above. In this simulation, it was supposed that a red light beam of 63 0 nm wavelength is applied to the optical diffraction element and that the beam has a Gaussian intensity distribution in its circular cross section. Consequently, a rectangular illumination area of 0.5 mm × 0.25 mm was formed on a prescribed illumination surface, and a uniform light intensity was obtained in the illumination area. In this case, variation in uniformity of the light intensity in the illumination area was 5.8 % or less and the diffraction efficiency was 37.6 %.

It is known that the diffraction efficiency in the optical diffraction element of the refractive-index-modulated type can be enhanced with increase in refractive index difference Δn of the refractive index modulation and it is theoretically predicted that the diffraction efficiency can be enhanced up to 40% in the two-level optical diffraction element. Further, as discussed above, the diffraction efficiency can be enhanced by increasing the number of levels of the refractive index modulation in the optical diffraction element. It is theoretically predicted that an optical diffraction element with eight levels for example can provide a diffraction efficiency of 95%.

The beam-shaping element as shown in Fig. 1 can actually be fabricated by a method as illustrated in schematic cross-sectional views in Figs. 2A and 2B, for example.

In Fig. 2A, a DLC film 41 is deposited to a thickness of about 4 µm on a quartz glass (not shown) by plasma CVD for example, and then an electrically conductive Ni layer 42 of about 50 nm or less in thickness is deposited on DLC film 41 by well-known sputtering or EB (electron beam) evaporation for example. On this Ni conductive layer 42, a resist pattern 43 is formed to cover regions corresponding to the black strip-shaped regions shown in Fig. 1. Such a resist pattern can be formed for example by utilizing stepper exposure. In each opening of resist pattern 43, a gold mask 44 of about 0.5 µm thickness is formed by electroplating. The gold mask of this thickness can block approximately 99% of even such a high-energy beam as an SR beam.

In Fig. 2B, resist pattern 43 is removed to leave gold mask pattern 44. Through the opening of gold mask pattern 44, an energy beam 45 such as UV radiation for example can be applied to DLC film 41. As a result, the refractive index of strip-shaped regions 41a irradiated with energy beam 45 is increased, while strip-shaped regions 41b masked from energy beam 45 keeps the original refractive index of the DLC film. More specifically, the refractive index of the DLC film can be increased up to an index change of about Δn = 0.20 by using a KrF excimer laser to apply UV radiation of 246 nm wavelength at a irradiation density of 160 mW/mm² per pulse with 100 Hz pulses. Accordingly, it is possible to obtain a two-level diffraction beam-shaping element as shown in Fig. 1.

It goes without saying that the formation of the mask pattern and the energy beam irradiation as described above can be repeated to obtain a multi-level diffraction-type beam-shaping element in which the diffraction efficiency can be enhanced. Further, for the energy beam for increasing the refractive index of the DLC film, an ion beam and an electron beam for example may be used other than an SR (X-ray) beam and a UV beam as described above.

Moreover, the method of fabricating the diffraction-type beam-shaping element as shown in Fig. 1 is not limited to the method illustrated in Figs. 2A and 2B. For example, it goes without saying that a mask having a prescribed pattern may be formed separately and such an energy beam as a UV beam may be directed through the mask to the DLC film. With this method, the mask can repeatedly be used and the UV radiation can more conveniently be used at lower costs as compared with SR radiation.

The diffraction-type beam-shaping element of the present invention that can be obtained in the above-described way may preferably be used, for example, for a DLP projector for projecting an image by rapidly operating microscopically small mirrors, such a projector as a projection-type liquid crystal display, and the like.

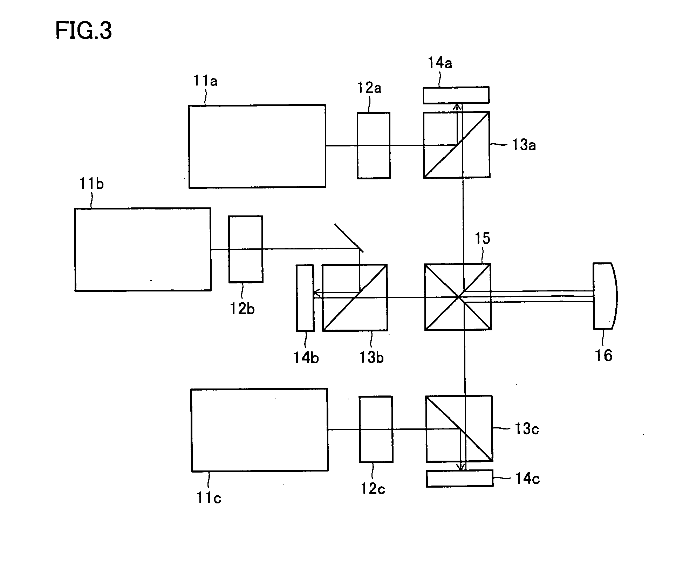

Fig. 3 is a schematic block diagram showing an example of a color projector including the diffraction-type beam-shaping element of the present invention. In this projector, beams having circular cross sections which are emitted respectively from laser devices 11a, 11b and 11c for emiting red light, green light and blue light respectively are converted by diffraction-type beam-shaping elements 12a, 12b and 12c of the present invention into respective beams each having a uniform intensity distribution in its rectangular cross section, and the resultant beams are directed via polarization beam splitters 13a, 13b and 13c onto reflection-type LCD panels 14a, 14b and 14c having rectangular display surfaces. The beams reflected from respective LCD panels are passed through polarization beam splitters 13a, 13b and 13c and thereafter combined by a color-combining prism 15 to be projected by a projection lens 16 onto a screen (not shown).

In other words, the beams emitted respectively from laser devices 11a, 11b and 11c are efficiently converted by diffraction-type beam-shaping elements 12a, 12b and 12c of the present invention into respective beams each having a uniform intensity distribution in its rectangular cross section, and the beam as converted to have the rectangular cross section can irradiate the whole region of the rectangular LCD panel with a uniform light intensity. Finally, the efficiency in use of light energy from the light source can be improved while display with uniform brightness can be provided on the whole region of the rectangular screen. Namely, a high-quality image can be projected.

Regarding the optical diffraction element of the refractive-index-modulated type, it has been confirmed by the inventors' simulation that influence of the light wavelength on the diffraction efficiency becomes small with increase in refractive-index difference Δn of the refractive index modulation. Specifically, since the DLC film can be used to produce the beam-shaping element of the refractive-index-modulated type having a large refractive index difference Δn as in the present invention, it is possible to provide the beam-shaping element suitable for a color projector in which it is necessary to perform beam-shaping on a light beam including such different wavelengths as of red, green and blue. More specifically, the preferable beam-shaping element of the present invention can provide the beam-shaping effect on visible light in a wide wavelength range of 0.4 to 0.7 µm.

While the laser device is used as a light source in the projector of Fig. 3, it goes without saying that a light-emitting diode or a lamp may be used instead of it. As such a lamp, it is possible to preferably use an extra-high-pressure mercury lamp, a xenon lamp and a halide lamp, for example.

### Industrial Applicability

As discussed above, according to the present invention, an optical diffraction element can readily be provided at low costs, which can make a uniform light intensity distribution in a cross section of a light beam and can further shape the cross-sectional form of the beam. Such an optical diffraction element can preferably be used for a projector for, example. Further, the optical diffraction element of the present invention can also preferably be used for a scanner, a printer, a copier, a barcode reader, and the like.

## Claims

1. A optical diffraction element of a refractive-index-modulated type comprising a transparent DLC film (41) formed on a transparent substrate, wherein
said DLC film is subjected to refractive-index modulation so as to include a plurality of relatively-high-refractive-index regions (41a) and a plurality of relatively-low-refractive-index regions (41b) for causing diffraction of light, and
said refractive-index modulation causes diffraction effect so as to convert an intensity distribution in a cross section of a light beam applied to said DLC film into a uniform intensity distribution on a prescribed illumination surface.

2. The optical diffraction element of the refractive-index-modulated type according to claim 1, wherein
said refractive-index modulation also causes diffraction effect so as to convert a cross-sectional shape of the light beam applied to said DLC film into a prescribed cross-sectional shape on the prescribed illumination surface.

3. The optical diffraction element of the refractive-index-modulated type according to claim 1, wherein
said refractive-index modulation causes said diffraction effect on light including a wavelength in a visible range of 0.4 to 0.7 µm.

4. A projector comprising the optical diffraction element of the refractive-index-modulated type (12a, 12b, 12c) of claim 1 and a light source (11a, 11b, 11c).

5. The projector according to claim 4, wherein
said light source is any of a laser device, a light-emitting diode and a lamp.

6. The projector according to claim 5, wherein
said lamp is any of an extra-high-pressure mercury lamp, a xenon lamp, and a halide lamp.

7. A method of fabricating the optical diffraction element of the refractive-index-modulated type of claim 1, wherein said DLC film (41) is formed by means of plasma CVD.

8. The method of fabricating the optical diffraction element according to claim 7, wherein
said relatively-high-refractive-index regions (41 a) in said DLC film (41) are formed by applying energy beam irradiation (45) to the DLC film to increase the refractive index.

9. The method of manufacturing the optical diffraction element according to claim 8, wherein
at least one of ion irradiation, electron beam irradiation, SR irradiation, and UV irradiation is selected for said energy beam irradiation.
